Europäisches Patentamt

(19) European Patent Office

Office européen des brevets

(11) Publication number: **0 027 040**
**B1**

(12) EUROPEAN PATENT SPECIFICATION

(45) Date of publication of patent specification: **04.04.84**

(51) Int. Cl.³: **B 23 P 1/08, H 03 K 3/64**

(21) Application number: **80303491.7**

(22) Date of filing: **03.10.80**

(54) **A wire-cut electric-discharge machine and a power source for such a machine.**

(30) Priority: **04.10.79 JP 128380/79**

(43) Date of publication of application:
**15.04.81 Bulletin 81/15**

(45) Publication of the grant of the patent:
**04.04.84 Bulletin 84/14**

(84) Designated Contracting States:
**CH DE FR GB LI**

(56) References cited:
**CH - A - 557 215**
**CH - A - 586 091**
**GB - A - 1 213 648**
**US - A - 2 895 080**
**US - A - 3 536 881**

(73) Proprietor: **FANUC LTD**
**5-1, Asahigaoka 3-chome Hino-shi**
**Tokyo 191 (JP)**

(72) Inventor: **Obara, Haruki**
**No. 844-7, Hashimoto**
**Sagamihara-shi Kanagawa 229 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England.

# A wire-cut electric-discharge machine and a power source for such a machine

The present invention relates to a wire-cut electric-discharge machine and a power source for such a machine.

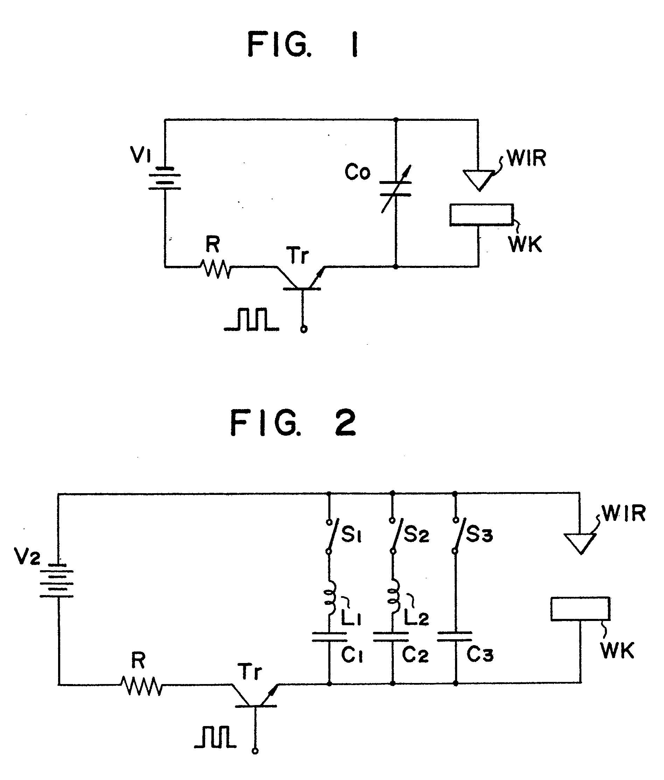

A power source that has heretofore been employed for a wire-cut electric-discharge machine capable of highly accurate machining of a metal mould or the like of a complicated configuration through the use of a wire electrode for electric-discharge machining of the mould is such, for example, as is shown in Figure 1 of the accompanying drawings, which is a schematic circuit diagram. The power source of Figure 1 is formed by a transistor-capacitor discharge circuit comprising a power source $V_1$, a charging resistor R, a transistor Tr for control use and a capacitor $C_0$ connected between a wire electrode WIR and a workpiece WK. With such a power source, high-speed cutting of the workpiece WK can be performed by selecting the capacitance of the capacitor $C_0$ to be large, the inductance of the discharge circuit to be small and the voltage of the power source $V_1$ to be low. In this case, however, the roughness of the machined surface of the workpiece WK is increased as the capacitance of the capacitor $C_0$ is increased. It has been general practice heretofore, to improve surface roughness by decreasing the capacitance of the capacitor $C_0$ in a case in which a high degree of accuracy is required of the machined surface. However, the conventional circuit arrangement of Figure 1 has a defect in that a decrease in the capacitance of the capacitor $C_0$ may sometimes result in unstable discharge and extremely reduced cutting speed.

CH—A—586 091 discloses a machining circuit, for an electro-erosion machine, comprising a capacitive element $C_u$ and a self-inductance L connected in series across a machining gap. A further capacitive element $C_{sh}$ and a resistive element $R_{sh}$ are connected in series with one another and in parallel with the self-inductance L. It is disclosed that the capacitive element $C_u$ is for producing erosion pulses across the machining gap and that the self-inductance L is for controlling duration of those pulses. It is disclosed that for adjustment of machining conditions means may be provided for adjusting the value of capacitive element $C_u$ and conjointly that of capacitive element $C_{sh}$. It is disclosed that for adjustment of pulse duration means for adjusting the value of self-inductance L may be provided. The value adjustments may be step adjustments.

US—A—2 895 080 discloses a power supply for an electric-discharge machine having a plurality of parallel-connected resonant circuits, each such circuit comprising a series-connected capacitor and inductor, connected across a machining gap, to eliminate reversal of current through the gap.

According to the present invention there is provided a wire-cut electric-discharge machine comprising a power source employing a transistor-capacitor discharge circuit, having a control transistor with a switching function, a plurality of inductors having different inductance values; a plurality of capacitors of different capacitance values, each capacitor being series-connected to one of the plurality of inductors to form a plurality of capacitor-inductor pairs, the inductance value of the inductor in any capacitor-inductor pair being greater than the inductance value of the inductor in any other capacitor-inductor pair that includes a capacitor having a smaller capacitance value; and switch means for selectively connecting the capacitor-inductor pairs to the transistor-capacitor discharge circuit.

An embodiment of the present invention can provide a wire-cut electric-discharge machining power source which, even when a small-capacitance discharge capacitor is used for enhancement with regard to machined surface roughness (i.e. increased smoothness), ensures a stable discharge so that cutting speed can be as high as possible.

An embodiment of the present invention can provide a wire-cut electric-discharge machining power source which employs a plurality of discharge capacitors of different capacitances so that machining operations from rough machining to finishing can be performed at as high a speed as possible.

Briefly, a wire-cut electric-discharge machining power source embodying the present invention employs a plurality of capacitors, of different capacitances, as discharge capacitors in a transistor-capacitor discharge circuit. The capacitances of the capacitors are set to respective values suitable for respective particular machining operations, for example, rough, medium and finish machining operations. Each capacitor has connected thereto an inductor. The inductance values of the inductors increase as the capacitance values of the capacitors with which they are connected decrease. The action of the inductances ensures a stable discharge. By operating switches for selectively changing over the discharge capacitors in accordance with required machining operations, machining from roughing to finishing can be achieved at high speed.

Reference is made, by way of example, to the accompanying drawings, in which:—

Figure 1, as mentioned above, is a schematic circuit diagram illustrating a conventional wire-cut electric-discharge machining power source; and

Figure 2 is a schematic circuit diagram illustrating a wire-cut electric-discharge machining power source embodying the present invention.

The present inventor has carried out experiments which have shown that in the case of electric-discharge machining using a capacitor of a small capacitance, a relatively large inductance in the discharge circuit and a high power source voltage suppresses the possibility of short-circuiting, thereby to ensure stable discharge, permitting an increase in the cutting speed without degradation with regard to machined surface roughness. The inventor has thus determined that machining operations from roughing to finishing can be performed at the highest possible speed by changing the inductance of the discharge circuit in dependence upon the capacitance of the capacitor used in the circuit, because of the fact that high-speed machining can be achieved by increasing the capacitance of the capacitor and using a low-inductance discharge circuit as mentioned previously.

Figure 2 is an electric circuit diagram illustrating an embodiment of the present invention, in which parts corresponding to those in Figures 1 are identified by the same reference characters. In Figure 2, reference characters $C_1$ to $C_3$ are capacitors; $L_1$ and $L_2$ are inductors; $S_1$ to $S_3$ are switches; and $V_2$ is a power source.

In Figure 2, the capacitors $C_1$ to $C_3$ are each connected in parallel with the power source $V_2$. The inductor $L_1$ and the switch $S_1$ are connected in series with the capacitor $C_1$, and the inductor $L_2$ and the switch $S_2$ are connected in series with the capacitor $C_2$. No particular inductor is connected to the capacitor $C_3$ since a lead wire or the like has a stray inductance; only the switch $S_3$ is connected in series with the capacitor $C_3$. The capacitor $C_3$ is provided for rough machining and has the largest capacitance of capacitors $C_1$, $C_2$, $C_3$. The capacitor $C_1$ is for finishing and has the smallest capacitance. The capacitor $C_2$ is for medium machining and has a capacitance substantially intermediate between those of the capacitors $C_1$ and $C_2$. The inductors $L_1$ and $L_2$ respectively connected to the capacitors $C_1$ and $C_2$ are provided for increasing the cutting speed, and their inductance values are set so that they may increase as the capacitance values of the capacitors decrease. In this case, the inductance value of the inductor $L_1$ is set to be larger than that of the inductor $L_2$.

As referred to above, it has been confirmed experimentally that when using a capacitor of a small capacitance, a certain increase in the inductance of the discharge circuit suppresses the occurrence of short-circuiting to thereby stabilize the discharge, and thereby permit an increase in the cutting speed.

It is assumed that the increase in the inductance causes a decrease in the pulse height of one shot of discharge current, so reducing the discharge pressure, so that no unnecessary vibration is imparted to the wire.

Furthermore, it has been confirmed experimentally that an excessive increase in the inductance decreases the pulse height of the discharge current to reduce machining performance. Accordingly, there are optimum inductance values of the inductors $L_1$ and $L_2$. For example, in a case where a stray inductance of about 0.3 $\mu$H (microHenry) exists, the capacitor $C_3$ may have a capacitance value of 2 to 3 $\mu$F (microfarad). In a case in which the capacitor $C_2$ has a capacitance value of 0.1 to 0.5 $\mu$F, it is preferred that the inductance value of the inductor $L_2$ is in the range of 0.4 to 0.7 $\mu$H. Further, it has been confirmed experimentally that in the case of setting the capacitance value of the capacitor $C_1$ in the range of 0.01 to 0.1 $\mu$F, it is preferred that the inductance value of the inductor $L_1$ is 1 to 1.2 $\mu$H or so. Incidentally, when machining was conducted using a capacitor $C_1$ having a capacitance value of 0.08 $\mu$F without the inductor $L_1$, the cutting speed was 60 to 70% lower than that in the case when inductor $L_1$ was employed.

With the arrangement described above, when only switch $S_3$ is closed, the large-capacitance capacitor $C_3$ with no inductor connected thereto is connected in parallel with the power source $V_2$, permitting high-speed rough machining. When switch $S_1$ alone is closed, the series circuit of the capacitor $C_1$ and the inductor $L_1$ is connected in parallel with the power source $V_2$ and finish machining takes place. In this case, since the inductor $L_1$ is connected to the capacitor of small capacitance, the discharge is made stable and a sufficient cutting speed can be maintained. Likewise, when the switch $S_2$ alone is closed, the series circuit of the capacitor $C_2$ and the inductor $L_2$ is connected to the power source $V_2$ and medium machining is carried out. In this way, by changing over between capacitors by means of the switches $S_1$ to $S_3$, the inductance of the discharge circuit can be changed in dependence upon the capacitance value of the capacitor, and as a consequence, a substantially sufficient cutting speed can be maintained from rough to finish machining operations.

While in the foregoing embodiment use is made of three capacitors $C_1$ to $C_3$ which are selectively changed over by the switches $S_1$ to $S_3$, the number of capacitors used need not always be limited specifically thereto but may also be selected to be two or more as desired. Also, a single rotary switch may be substituted for the switches $S_1$ to $S_3$.

As will be appreciated from the foregoing description, in embodiments of the present invention, the inductance of a discharge circuit is changed in dependence upon the capacitance value of each of the capacitors used, whereby a sufficient cutting speed can be maintained over an entire machining operation from rough to finish machining.

Thus, in a power source for a wire-cut electric-discharge machine, a plurality of capacitors of different capacitances are provided as discharge capacitors of a transistor-capacitor circuit, and the capacitors are selectively used in accordance with particular machining operations. Each capacitor has connected thereto an inductor the inductance value of which increases as the capacitance value of the capacitor decreases.

## Claims

1. A wire-cut electric-discharge machine comprising a power source employing a transistor-capacitor discharge circuit, having a control transistor (TR) with a switching function, a plurality of inductors ($L_1$, $L_2$) having different inductance values; a plurality of capacitors ($C_1$, $C_2$, $C_3$) of different capacitance values, each capacitor being series-connected to one of the plurality of inductors to form a plurality of capacitor-inductor pairs ($C_1$, $L_1$; $C_2$, $L_2$), the inductance value of the inductor in any capacitor-inductor pair being greater than the inductance value of the inductor in any other capacitor-inductor pair that includes a capacitor having a smaller capacitance value; and switch means ($S_1$, $S_2$, $S_3$) for selectively connecting the capacitor-inductor pairs to the transistor-capacitor discharge circuit.

2. A wire-cut electric-discharge machine as claimed in claim 1, wherein the switch means comprises a rough machining switch ($S_3$) series connected to the capacitor-inductor pair that includes the capacitor ($C_3$) having the greatest capacitance value.

3. A wire-cut electric-discharge machine as claimed in claim 1 or 2, wherein there are three capacitor-inductor pairs, and wherein the switch means comprise a rough machining switch ($S_3$) series-connected to the capacitor-inductor pair that includes the capacitor having the highest capacitance value, a medium machining switch ($S_2$) series-connected to the capacitor-inductor pair that includes the capacitor having the second highest capacitance value, and a finished machining switch ($S_1$) series-connected to the capacitor-inductor pair that includes the capacitor having the smallest capacitance value.

4. A wire-cut electric-discharge machine as claimed in claim 2 or 3, wherein the inductor in the capacitor-inductor pair that is series-connected to the rough machining switch ($S_3$) is constituted by stray inductance.

## Patentansprüche

1. Mit elektrischer Entladung arbeitende Schneiddrahtmaschine, gekennzeichnet durch eine Stromquelle, die eine Transistor-Kondensator-Entladeschaltung · verwendet, welche einen Steuertransistor (TR) mit einer Schaltfunktion aufweist, ferner eine Mehrzahl von Spulen ($L_1$, $L_2$) mit verschiedenen Induktivitätswerten, eine Mehrzahl von Kondensatoren ($C_1$, $C_2$, $C_3$) mit verschiedenen Kapazitätswerten, wobei jeder Kondensator mit einer der Mehrzahl von Spulen in Reihe geschaltet ist, um eine Mehrzahl von Kondensator-Spulen-Paaren ($C_1$, $L_1$; $C_2$, $L_2$) zu bilden, und wobei der Induktivitätswert der Spule in irgendeinem Kondensator-Spulen-Paar größer ist als der Induktivitätswert der Spule in einem Kondensator-Spulen-Paar, das einen Kondensator mit kleinerem Kapazitätswert umfaßt, sowie eine Schaltereinrichtung ($S_1$, $S_2$, $S_3$) zum wahlweisen Verbinden der Kondensator-Spulen-Paare mit der Transistor-Kondensator-Entladeschaltung.

2. Maschine nach Anspruch 1, dadurch gekennzeichnet, daß die Schaltereinrichtung einen Grobbearbeitungsschalter ($S_3$) umfaßt, welcher mit dem Kondensator-Spulen-Paar in Reihe geschaltet ist, das den Kondensator ($C_3$) mit dem größten Kapazitätswert enthält.

3. Maschine nach Anspruch 1 oder 2, dadurch gekennzeichnet, daß drei Kondensator-Spulen-Paare vorhanden sind, und daß die Schaltereinrichtung einen Grobbearbeitungsschalter ($S_3$) umfaßt, der mit dem Kondensator-Spulenpaar in Reihe geschaltet ist, welches den Kondensator mit dem größten Kapazitätswert enthält, ferner einen Mittelbearbeitungsschalter ($S_2$), der mit dem Kondensator-Spulen-Paar in Reihe geschaltet ist, welches den Kondensator mit dem zweitgrößten Kapazitätswert enthält, sowie einen Endbearbeitungsschalter ($S_1$), der mit dem Kondensator-Spulen-Paar in Reihe geschaltet ist, welches den Kondensator mit dem kleinsten Kapazitätswert enthält.

4. Maschine nach Anspruch 2 oder 3, dadurch gekennzeichnet, daß die Spule in dem Kondensator-Spulen-Paar, das mit dem Grobbearbeitungsschalter ($S_3$) in Reihe geschaltet ist, durch Streuinduktivität gebildet wird.

## Revendications

1. Une machine d'électro-érosion à fil coupant comprenant une source d'énergie employant un circuit de décharge à transistor-condensateur, ayant un transistor de commande (TR) avec une fonction de commutation; un ensemble d'inductances ($L_1$, $L_2$) ayant des valeurs différentes; un ensemble de condensateurs ($C_1$, $C_2$ $C_3$) ayant des valeurs de capacité différentes, chaque condensateur étant connecté en série à une inductance de l'ensemble d'inductances, pour former un ensemble de paires condensateur-inductance ($C_1$, $L_1$; $C_2$, $L_2$), la valeur de l'inductance dans n'importe quelle paire condensateur-inductance étant supérieure à la valeur de l'inductance dans n'importe quelle autre paire condensateur-inductance qui comprend un condensateur ayant une plus faible valeur de capacité; et des moyens de commutation ($S_1$, $S_2$, $S_3$) pour connecter sélectivement les paires condensateur-inductance au circuit de décharge à transistor-condensateur.

2. Une machine d'électro-érosion à fil coupant selon la revendication 1, dans laquelle les moyens de commutation comprennent un interrupteur d'usinage grossier $(S_3)$ connecté en série avec la paire condensateur-inductance qui comprend le condensateur $(C_3)$ ayant la plus grande valeur de capacité.

3. Une machine d'électro-érosion à fil coupant selon la revendication 1 ou 2, dans laquelle il y a trois paires condensateur-inductance, et dans laquelle les moyens de commutation comprennent un interrupteur d'usinage grossier $(S_3)$ connecté en série à la paire condensateur-inductance qui comprend le condensateur ayant la valeur de capacité la plus élevée, un interrupteur d'usinage moyen $(S_2)$ connecté en série à la paire condensateur-inductance qui comprend le condensateur ayant la valeur de capacité immédiatement inférieure à la valeur la plus élevée, et un interrupteur d'usinage de finition $(S_1)$ connecté en série à la paire condensateur-inductance qui comprend le condensateur ayant la plus faible valeur de capacité.

4. Une machine d'électro-érosion à fil coupant selon la revendication 2 ou 3, dans laquelle l'inductance appartenant à la paire condensateur-inductance qui est connectée en série avec l'interrupteur d'usinage grossier $(S_3)$ est constituée par une inductance parasite.

# FIG. 1

# FIG. 2